# EUROPEAN PATENT SPECIFICATION

(11) **EP 4 464 564 B1**
(45) Date of publication and mention of the grant of the patent: **25.11.2026**
(21) Application number: 23173356.9
(22) Date of filing: 15.05.2023
(51) Int. Cl.: B60T 17/22, B60T 13/38

(54) **A SAFETY PARK BRAKE SYSTEM OF A VEHICLE AND A METHOD FOR ACTIVATING A PNEUMATIC PARK BRAKE OF A VEHICLE**
SICHERHEITSFESTSTELLBREMSSYSTEM EINES FAHRZEUGS UND VERFAHREN ZUR AKTIVIERUNG EINER PNEUMATISCHEN FESTSTELLBREMSE EINES FAHRZEUGS
SYSTÈME DE FREIN DE STATIONNEMENT DE SÉCURITÉ D'UN VÉHICULE ET MÉTHODE D'ACTIVATION D'UN FREIN DE STATIONNEMENT PNEUMATIQUE D'UN VÉHICULE

(43) Date of publication of application: 20.11.2024
(73) Proprietor: VOLVO TRUCK CORPORATION, 405 08 Göteborg (SE)
(72) Inventor: GAILLAUD, Pierig, 69003 LYON (FR); BLANC, Xavier, 69680 Chassieu (FR)
(74) Representative: Zacco Sweden AB

(56) References cited:
- DE-B4- 102013 106 260

## Description

### TECHNICAL FIELD

The invention relates generally to a park brake system. In particular aspects, the invention relates to park brake safety activation. The invention can be applied to heavy-duty vehicles, such as trucks, buses, and construction equipment, among other vehicle types. Although the invention may be described with respect to a particular vehicle, the invention is not restricted to any particular vehicle. DE 102013106260 B4 relates to relates to an electropneumatic brake system for a commercial vehicle or a trailer.

### BACKGROUND

On a vehicle equipped with an electronic park brake, if a primary electronic park brake system is down, a driver can manually apply a manual service brake until pressure is between around 135 and 315 kPa to automatically apply the parking brakes. This operation can take a long time for the system to activate the park brake because the driver needs to deflate the system while the compressor is actively compressing air. The driver has an option to shut off the vehicle's engine. However, generally, the driver does not feel safe to shut the engine down until the vehicle is parked and the park brake is applied.

Therefore, there is a need for a system which would effectively apply the park brake in a safe, automatic, and quick manner.

### SUMMARY

According to a first aspect of the invention, a safety park brake system of a vehicle is disclosed. The safety system comprises a pneumatic park brake, a park brake electronic unit, a controller, an air brake sub-system in air communication with the pneumatic park brake, and a compressor. The compressor is configured to provide pressurized air to the air brake sub-system through a discharge line arranged between the compressor and the air brake sub-system. The controller is configured to receive a park brake request, detect an error associated with a failure in the park brake electronic unit, and impede inflow of pressurized air into the air brake sub-system. The safety park-brake system is configured to control discharge of air from the air brake sub-system to thereby achieve a drop in air pressure. The pneumatic park brake is configured to automatically apply once the air pressure in the air brake sub-system drops below a predetermined threshold.

The first aspect of the invention may seek to solve a problem of time and energy consuming activation of a park brake in cases when electronics related to or including the park brake is malfunctioning. A technical benefit may include a system capable of fast and energy efficient activation of the pneumatic park brake in cases when the electronics related to the park brake is malfunctioning.

The safety park brake system is to be understood as an automatic system for automatic activation of a manual park brake in cases when an electronic part of parking brake system is malfunctioning. The vehicle may be an electric vehicle or a vehicle with an internal combustion engine (ICE). The vehicle may be a traditional vehicle as well as a full autonomous vehicle. The vehicle may be a truck, or a bus, or any other heavy duty vehicle.

The pneumatic park brake is to be understood as an air brake or a compressed air brake which typically uses compressed air generated by the compressor and stored in a reservoir. When the vehicle's driver actuates a brake lever or a pedal, a brake valve allows compressed air to flow to a piston that engages the brake. The pneumatic brake typically comprises a spring which then disengages the pneumatic brake when the pressure is released.

The park brake electronic unit of the safety system is to be understood as an electronic unit that may be electronically connected to the pneumatic park brake and/or may comprise an additional park brake, such as an electronic park brake. The park brake electronic unit may obtain information about operation of the pneumatic park brake and/or about the electronic park brake, e.g. the park brake electronic unit may be an electronic diagnostic system connected to the pneumatic and/or electronic park brake.

The controller may be a computing unit, e.g. a processor, a microprocessor, a microcontroller, or may be implemented by a plurality of controlling units each being responsible for various components of the safety system. The controller may as well be a central controller of the vehicle configured to control most of vehicle controllable components.

The air brake sub-system may comprise a reservoir delivering air to the pneumatic park brake. The air brake sub system may deliver air to one or more other air consumers comprised in the vehicle. The air brake sub-system may comprise various components for controlling delivery of air to the pneumatic park brake and optionally, to other air consumers of the system. The air brake sub-system may receive pressurized air from the compressor. The air brake sub system may be in a direct connection with the compressor. The air brake sub-system may be a central air system of the vehicle, i.e. an air system delivering air to all air consumers of the vehicle or may be in a form of a separate air system delivering air to the park brake and one or more, but not all air consumers of the vehicle. The vehicle may therefore have the air brake sub-system and the vehicle central air system. The air brake sub-system is in air communication with the pneumatic park brake and the compressor and may also be in air communication with the vehicle central air system and other air consumers. The air brake sub-system is typically connected to the controller and receives control signals from the controller. The air brake sub-system may comprise its own controller configured to communicate with the central vehicle controller and/or with the controller of the safety park brake system.

The compressor is configured to provide pressurized air to the air brake sub-system through a discharge line. Additionally, the air compressor may also supply compressed air for, e.g., the vehicle air suspension. Typically, the air compressor is driven by the vehicle's engine. In electrical and/or hybrid vehicles, the compressor may be an electrical air compressor. In vehicles with the ICE, the compressor is driven directly by the ICE. The air compressor builds the air pressure for, e.g., the air suspension, auxiliary components, and the brake system, including the park brake system.

The discharge line is arranged between the compressor and the air brake sub-system. The discharge line may comprise valves, reservoirs, and other components, and may branch into a plurality of lines. The discharge line may also guide pressurized air to other air consumers of the vehicle.

The controller is configured to receive a park brake request. Typically, the park brake request may be initiated by the vehicle's driver who may press a button for park braking. Alternatively, in some cases, the park brake button may be automatically activated, such as for instance when parking conditions are detected by the vehicle control system. In some embodiments, the controller may receive other park brake requests such as an auto park request at engine stop, an auto park request if the driver opens the vehicle's door, a park request from an autonomous driver. The park brake button is typically connected to the controller and may communicate the park brake request thereto. Upon receiving the park brake request, the controller may be configured to communicate the park brake request further to the park brake electronic unit. In response to the park brake request, the park brake electronic unit may respond by activating the park brake (the pneumatic or electrical park brake) and sending a confirmation to the controller that the park brake has been successfully activated.

In some scenarios, the park brake electronic unit may, in response to the received park brake request, request activation of the park brake, typically an electronic park brake, and in the response to the activation request, receive a message about a failure of the electronic brake. In this scenario, the park brake electronic unit may send a signal back to the controller about the electronic park brake failure. In another scenario, the park brake electronic unit may be malfunctioning and thereby unable to respond to the request from the controller about the park brake activation. If the park brake electronic unit returns an error signal or does not return any signal to the controller, the controller identifies an error associated with a failure in the park brake electronic unit.

If the error associated with the failure in the park brake electronic unit is detected, the controller is configured to impede inflow of pressurized air into the air brake sub-system. The controller may act on the compressor directly to thereby impede inflow of pressurized air into the air brake sub-system. For instance, the controller may control the compressor to deliver less pressurized air into the air brake sub-system. Alternatively, the controller may activate one or more pneumatic and/or electronic components to thereby impede inflow of air into the air brake sub-system. In other words, the controller may be configured to obstruct and/or interfere with further delivery of pressurized air into the air brake sub-system such that the air brake sub-system receives less or no pressurized air from the compressor.

In addition to impeding inflow of pressurized air into the air brake system, pressurized air is also discharged from the air pressure system. The safety park-brake system is configured to control discharge of air from the air brake sub-system to thereby achieve a drop in air pressure. In some embodiments, the controller may be configured to control discharge of air from the air brake sub system. Discharge of air from the air brake sub-system can be achieved in various ways. In embodiments in which the air brake sub-system delivers air to other air consumers, delivery of air to one or more other air consumers may be understood as discharge of air from the air sub-system. Initially, i.e., before detection of failure in the park brake electronic system, the air brake sub-system may be characterized by a first pressure value. After the failure is diagnosed, in order to activate the manual pneumatic brake, the pressure in the air brake sub-system has to drop below a certain level in order to get the pneumatic park brake activated. In order to achieve a fast pressure drop and thereby quick automatic activation of the pneumatic park brake, the inventors of the present invention have found that the optimal way is to slow down/prevent or even stop inflow of air into the air brake sub-system and at the same time discharge air therefrom. In this way, apart from activating the park brake as quickly as possible and avoiding any safety issues, energy consumption of the compressor is reduced. If both steps are not performed, the compressor would otherwise work against the pressure drop and thereby unnecessary consume energy. As the compressor is delivering pressurized air, a desired drop in pressure would occur much later compared to the scenario in which air delivery to the air brake sub-system is impeded.

Once the air pressure in the air brake sub-system drops below the predetermined threshold, the pneumatic park brake will automatically apply. The predetermined threshold value may depend on a type of vehicle. For a standard truck, this value may be below 315 kPa, such as below 276 kPa, such as below 241 kPa, or even below 207 kPa. For other vehicles, the predetermined threshold value may be higher (lower) than 315 (207) kPa and may depend on state regulations. The pneumatic park brake may comprise a spring arranged such to respond to pressure changes. When the pressure in the air brake sub-system is at or above the predetermined threshold, the pneumatic park brake will be disengaged. When the pressure drops below the threshold, the spring of the pneumatic park brake may expand thereby engaging the pneumatic park brake.

The safety park brake system may comprise a pneumatic part and electronic part. Distribution center may include the pneumatic (toward some or all air consumers including park brake) and the electronic part configured to monitor pressure and control the compressor. The safety park brake system therefore may include an electronic and pneumatic control of the pneumatic park brake. The central air system and the pneumatic park brake may be together or separate. In some embodiments, an electronic failure may concern both the central system and the park brake. In this scenario, the compressor cannot be controlled. In some embodiments, there may only be an electronic park brake failure. In this case the compressor can still be controlled.

Optionally in some examples, including in at least one preferred example, the park brake electronic unit comprises an electronic diagnostic unit configured to monitor operation of the pneumatic park brake. In this case, the controller is configured to detect an error associated with a failure in the electronic diagnostic unit. The electronic diagnostic unit may also be connected to other components in the vehicle to receive data about their operation. In some examples, it may be the diagnostic unit that is malfunctioning and thus being unable to deliver appropriate data about the pneumatic/electronic park brake to the controller.

In some examples, the controller may be configured to detect an error associated with a failure on the electronic park brake, as identified by the electronic diagnostic unit. Namely, the electronic park brake may be malfunctioning and the diagnostic unit may detect the error and communicate it to the controller. The controller may then operate accordingly to trigger activation of the pneumatic park brake. A technical benefit of having an electronic diagnostic unit as part of the safety park brake system may be that an additional layer of monitoring is present and thereby safety and reliability of the system is improved. The electronic diagnostic unit may be included in every embodiment described further below.

Optionally in some examples, including in at least one preferred example, the park brake electronic unit comprises an electronic park brake. In some examples, the controller may be configured to detect an error associated with a failure in the electronic park brake. If the vehicle comprises an electronic park brake, the electronic park brake will be the primary park brake and the electronic park brake may be receiving the park brake request. If the electronic brake is malfunctioning, the pneumatic park brake has to be activated instead. The error may be detected directly from the electronic park brake or via the diagnostic unit. The electronic park brake may form part of an electronic park brake system. In some examples, the failure may occur anywhere on the electronic park brake system. Namely, it may be impossible to park via a hand control unit or via an autonomous driver demand.

In some embodiments, once the error associated with the failure in the park brake electronic unit is detected, the controller may provide a warning signal to the driver, informing the driver about the error. In some cases, the driver may receive a message to manually activate the pneumatic park brake. Even if the driver manually activates the pneumatic park brake, an actual actuation (engagement) of the park brake will be delayed as it is still needed to decrease pressure in the air brake sub-system. In this case, discharging of air from the air brake sub-system will be aided by the driver manually discharging the air. It may beneficial for the safety park brake system to comprise the warning signal to the driver to manually actuate the park brake, as a manual actuation of the pneumatic park brake may further speed up the actual actuation of it.

Optionally in some examples, including in at least one preferred example, the controller is configured to receive the park brake request while the vehicle is at standstill. The term standstill is to be interpreted such that the vehicle speed is up to 5-10 km/h, such as close to zero. The vehicle may though be performing some other operations, while standstill, and therefore being switched on. In such examples, the park brake request will typically be received from the driver. A technical benefit of having the vehicle being standstill and automatically activating the park brake is that safety of the vehicle and the driver is improved. In examples in which the vehicle is not standstill, e.g. when there is ice on the road and the vehicle is slipping, the park brake request may be initiated automatically by the vehicle central control unit.

Optionally in some examples, including in at least one preferred example, the safety park brake system further comprises a solenoid valve configured to operate in at least a first state and a second state. The controller may be configured to control the state of the solenoid valve. One of the states of the solenoid valve may be operational when there is no failure of the park brake electronic unit, diagnostic unit, and/or electronic park brake. The other state may be activated when the error is detected. The solenoid valve may be connected to the controller of the system and controlled such that inflow of pressurized air into the air brake sub-system is impeded. The solenoid valve may comprise its own controller connected to the controller of the safety system and receiving commands thereto. It is beneficial to utilize a solenoid valve in the safety park brake system as solenoid valves are known to be reliable and easy to control. By using the solenoid valve it is possible to shut off, release, dose, distribute or mix pressurized air from the compressor to thereby impede inflow of air into the air brake sub-system.

Optionally in some examples, including in at least one preferred example, the solenoid valve is arranged along the discharge line between the compressor and the air brake sub-system. The solenoid valve may be arranged at the outlet of the compressor. In a first state, the solenoid valve is configured to allow pressurized air from the air compressor to reach the air brake sub-system. The solenoid valve is controlled to operate in the first state when there is no error detected on the electronic park brake and/or diagnostic unit and when the safety system operates normally. In a second state, the solenoid valve is configured to guide pressurized air from the air compressor into the ambient air in order to impede inflow of pressurized air into the air brake sub-system. When the error associated with a failure in the park brake electronic unit is detected, the controller is configured to control the solenoid valve to operate in the second state. As the valve is arranged along the discharge line, the pressurized air from the compressor will not reach the air brake sub-system. Thereby, pressure drop in the air brake sub-system will be achieved faster compared to the scenario when the pressurized air is delivered to the air brake sub-system.

Optionally in some examples, including in at least one preferred example, the safety park brake system further comprises a pneumatic control line configured to guide pressurized air from the air brake sub-system. In this example, the solenoid valve is arranged along the pneumatic control line downstream the air brake sub-system. When there is no error in the system, the solenoid valve operates in a first state. In this state, the solenoid valve is configured to block pressurized air from the air brake sub-system. In other words, there is no outlet on the pneumatic control line and no air leak from the air brake sub-system. When there is a failure in the park brake electronic unit the solenoid valve operates in a second state. In the second state, the solenoid valve is configured to guide pressurized air from the air brake sub-system to the compressor. The compressor is configured to turn off upon receiving the pressurized air in order to impede inflow of pressurized air into the air brake sub-system. The compressor may be equipped with a pneumatically controlled clutch or a power saving system which gets activated upon receiving the pressurized air. The pneumatically controlled clutch or the power saving system may act on the compressor to stop delivery of pressurized air into the air brake sub-system thereby impeding inflow of pressurized air into the air brake sub-system. The pneumatically controlled clutch or the power saving system may act on the compressor to reduce air production. In some examples, the clutch of the compressor may disengage the compressor from the discharge line. In examples in which the compressor comprises the power saving system it is possibly to act on the compressor head to thereby drastically reduce compressor performance and power consumption. In this way energy efficiency of the system is improved as it is possible to switch off the compressor or reduce energy consumption. It is beneficial to control operation of the compressor and operate the compressor only when needed. In this way energy consumption is reduced. Also, activation of the pneumatic park brake may occur in less than 3 seconds with both stopping the compressor and simultaneously discharging of air from the air brake sub-system.

Optionally in some examples, including in at least one preferred example, the safety park brake system further comprises a control valve arranged along the pneumatic control line. The solenoid valve is configured to guide pressurized air from the air brake sub-system to the control valve and the control valve is configured to switch off power to the compressor upon receiving the pressurized air in order to impede inflow of pressurized air into the air brake sub-system. The control valve may be a double-check valve or a select-high valve. This is an alternative way to act directly on the compressor and control production of pressurized air. In this example, the compressor may as well be equipped with a pneumatically controlled clutch or a power saving system which gets activated upon receiving the pressurized air and the compressor may be either switched off or its air production may be reduced.

Optionally in some examples, including in at least one preferred example, the safety park brake system further comprises an air dryer arranged along the discharge line. The controller is configured to control the air dryer to discharge the pressurized air into the ambient air in order to impede inflow of pressurized air into the air brake sub-system. The air dryer may be configured to evacuate air from the compressor so that less or no air is delivered to the air brake sub-system. The air dryer may be combined with all embodiments presented so far, such as with the solenoid valve, as well as with the control valve to thereby further reduce delivery of air into the air brake sub-system. It is beneficial to utilize an air dryer for the safety park brake system as the air dryer is normally already present in a vehicle to prevent moisture, e.g. ice, into the braking system, that could also lead to braking malfunctioning. Utilizing the existing air dryer for the safety system reduces complexity of the braking system and the whole vehicle.

Optionally in some examples, including in at least one preferred example, the air dryer comprises an air dryer controller configured to receive input from the controller. The air dryer controller is configured to control the air dryer to discharge the pressurized air into the ambient air in order to impede inflow of pressurized air into the air brake sub-system. The air dryer is typically arranged along the discharge line. In some examples, the air dryer may be arranged and form part of the air brake sub-system.

Optionally in some examples, including in at least one preferred example, the safety park rake system is configured to receive an external input to thereby discharge air from the air brake sub-system. The external input may be received from a driver. The driver may press a foot pedal or pull a handle to thereby initiate a pressure drop in the air brake sub-system. In other examples, any other consumer may be used to discharge air from the air brake sub-system.

According to a second aspect of the invention, a method for activating a pneumatic park brake of a vehicle is disclosed. The vehicle comprises a compressor configured to provide pressurized air into an air brake sub-system being in air communication with the pneumatic park brake. The method comprises receiving a park brake request, detecting an error associated with a failure in a park brake electronic unit, impeding inflow of pressurized air into the air brake sub-system, discharging air from the air brake sub-system to thereby achieve a drop in air pressure, and automatically applying the pneumatic park brake once the air pressure in the air brake sub-system drops below a predetermined threshold.

The second aspect of the invention may also seek to solve a problem of time and energy consuming activation of a park brake in cases when electronics related to or including the park brake is malfunctioning. A technical benefit may include a system capable of fast and energy efficient activation of the park brake in cases when the electronics related to the park brake is malfunctioning.

According to a third aspect of the invention, vehicle comprising the safety park brake system according to any embodiment of the first aspect is disclosed. The vehicle may be an electric, hybrid, or traditional vehicle. It may be a car, or a bus, or a truck, or any other heavy duty vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

### BRIEF DESCRIPTION OF THE DRAWINGS

Examples are described in more detail below with reference to the appended drawings.
**FIG. 1** is an exemplary embodiment of a safety park brake system of a vehicle according to an example.
**FIG. 2** is another exemplary embodiment of a safety park brake system of a vehicle according to an example.
**FIG. 3** is yet another exemplary embodiment of a safety park brake system of a vehicle according to an example.
**FIG. 4** is yet another exemplary embodiment of a safety park brake system of a vehicle according to an example.
**FIG. 5** is yet another exemplary embodiment of a safety park brake system of a vehicle according to an example.
**FIG. 6** illustrates a method for automatically activating a pneumatic park brake of a vehicle according to an example.

### DETAILED DESCRIPTION

The detailed description set forth below provides information and examples of the disclosed technology with sufficient detail to enable those skilled in the art to practice the invention.

The present invention is applicable to both standard vehicles and full autonomous vehicles, such as cars, trucks, buses, etc. equipped with an air management braking system and an electronic park brake system in case of electronic park brake system failure, i.e. in cases when it is impossible to park via a hand control unit or via an autonomous driver demand. On a regular truck equipped with an electronic park brake, if a primary electronic park brake system is down, the driver can manually apply service brake until pressure is between 138 and 310 kPa to automatically apply the parking brakes. In the USA it is also a required by regulation FMCSR §393.43 (b). Manually applying the service brake can take a long time for the system to park because the driver needs to deflate the system while the compressor is actively compressing air (fail state of the compressor control is to constantly produce air to the truck). The driver can still shut off the engine but generally the driver does not feel safe to shut the engine down until the truck is safely parked. Additionally, for full autonomous trucks, for safety reasons, the request is higher to keep alive electric power production, and for the traditional vehicles, the ICE should run until the truck is fully parked. Existing solution is to work against the compressor while deflating the air at the brake pedal. This can last long and vast amount of energy is lost as the compressor is actively pumping pressurized air. Alternatively, the engine may be shut down. However, this is not safe as there is no more electric power production in the un-parked vehicle. The present invention relates to a system configured to stop or reduce the air production during an electronic park brake system failure without turning off the engine. The system may utilize various valves controlled by the system controller either on control line or discharge line of the air compressor. The system provides automatic, fast, and energy efficient system.

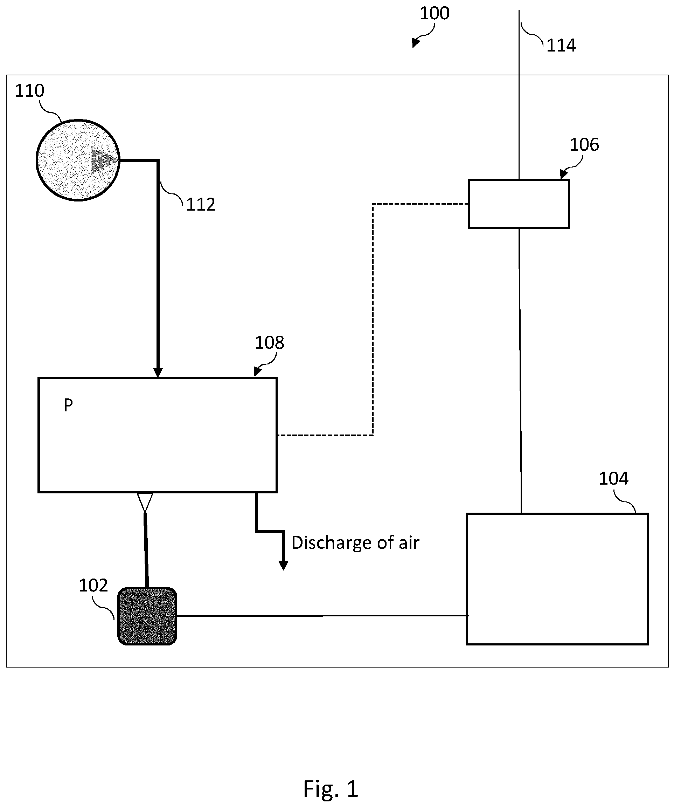

**FIG. 1** is an exemplary embodiment of a safety park brake system 100 of a vehicle according to an example. The safety system 100 comprises a pneumatic park brake 102, a park brake electronic unit 104, a controller 106, an air brake sub-system 108 in air communication with the pneumatic park brake 102, and a compressor 110. The compressor 110 is configured to provide pressurized air to the air brake sub-system 108 through a discharge line 112 arranged between the compressor 110 and the air brake sub-system 108. The controller 106 is configured to receive a park brake request 114, detect an error associated with a failure in the park brake electronic unit 104, and impede inflow of pressurized air into the air brake sub-system 108. The safety park-brake system 100 is configured to control discharge of air from the air brake sub-system 108 to thereby achieve a drop in air pressure. The pneumatic park brake 102 is configured to automatically apply once the air pressure P in the air brake sub-system 108 drops below a predetermined threshold. The embodiment shown in Fig. 1 solves a problem of time and energy consuming activation of a park brake in cases when electronics related to or including the park brake is malfunctioning. A technical benefit may include a system capable of fast and energy efficient activation of the park brake in cases when the electronics related to the park brake is malfunctioning.

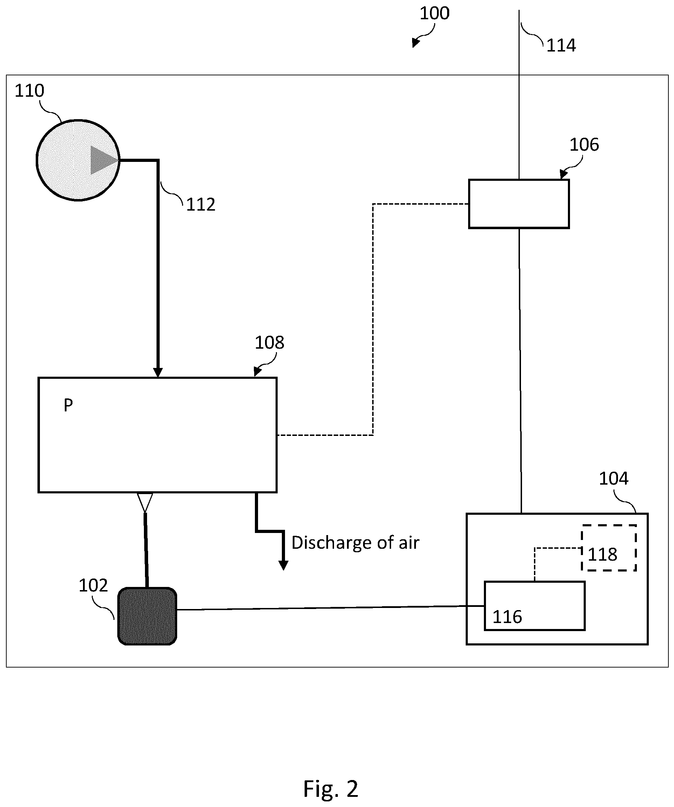

**FIG. 2** is another exemplary embodiment of a safety park brake system 100 of a vehicle according to an example. The park brake electronic unit 104 comprises an electronic diagnostic unit 116 configured to monitor operation of the pneumatic park brake 102. In this case, the controller 106 is configured to detect an error associated with a failure in the electronic diagnostic unit 116. The electronic diagnostic unit 116 may also be connected to other components in the vehicle to receive data about their operation. In some examples, it may be the diagnostic unit that is malfunctioning and thus being unable to deliver appropriate data about the pneumatic/electronic park brake to the controller.

In some cases, the park brake electronic unit 104 comprises an electronic park brake 118. The electronic park brake may form part of the park brake electronic unit 104 while the electronic diagnostic unit 116 is not part of the park brake electronic unit 104 (not shown). In some examples, the controller 16 may be configured to detect an error associated with a failure in the electronic park brake 118. If the vehicle comprises the electronic park brake 118, the electronic park brake 118 may be the primary park brake and the electronic park brake may be receiving the park brake request via the controller 106. If the electronic brake 118 is malfunctioning, the pneumatic park brake 102 has to be activated instead. The error may be detected directly from the electronic park brake or via the diagnostic unit. The electronic park brake may form part of an electronic park brake system. In some examples, the failure may occur anywhere on the electronic park brake system. Namely, it may be impossible to park via a hand control unit or via an autonomous driver demand.

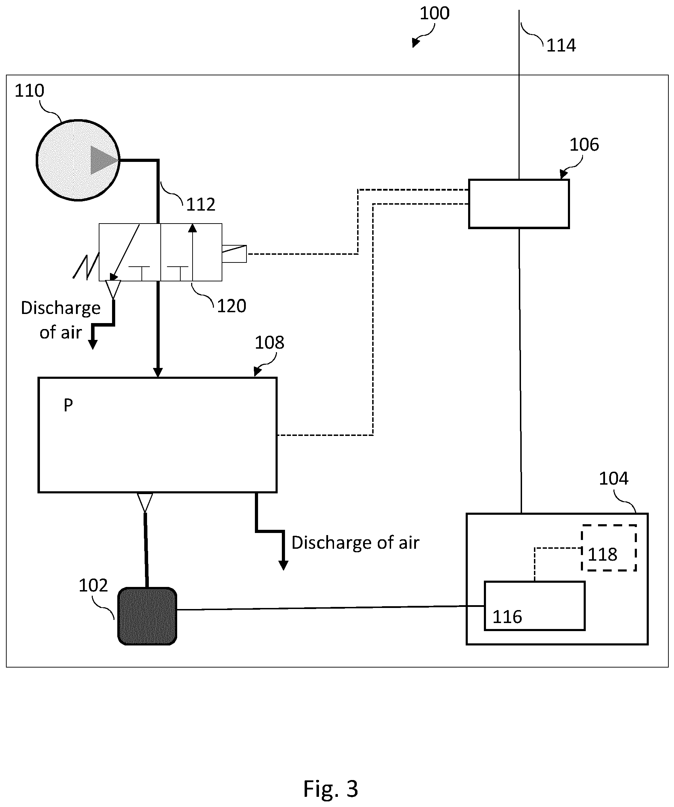

**FIG. 3** is yet another exemplary embodiment of a safety park brake system 100 of a vehicle according to an example. In this example, in addition to components shown on FIG. 1 or FIG. 2, the safety park brake system 100 further comprises a solenoid valve 120 configured to operate in at least a first state and a second state. The controller 106 may be configured to control the state of the solenoid valve 120. One of the state of the solenoid valve may be operational when there is no failure of the park brake electronic unit, diagnostic unit, and/or electronic park brake. The other state may be activated when the error is detected. The solenoid valve 120 may be connected to the controller 106 of the system and controlled such that inflow of pressurized air into the air brake sub-system is impeded. The solenoid valve may comprise its own controller connected to the controller 106 of the safety system and receiving commands thereto. It is beneficial to utilize a solenoid valve 120 in the safety park brake system as solenoid valves are known to be reliable and easy to control. By using the solenoid valve it is possible to shut off, release, dose, distribute or mix pressurized air from the compressor to thereby impede inflow of air into the air brake sub-system. The solenoid valve 120 is arranged along the discharge line 112 between the compressor 110 and the air brake sub-system 108. In a first state, when there is no error detected, the solenoid valve 120 is configured to allow pressurized air from the air compressor 110 to reach the air brake sub-system 108. In a second state, when the error associated with a failure in the park brake electronic unit is detected, the solenoid valve 120 is configured to guide pressurized air from the air compressor 110 into the ambient air in order to impede inflow of pressurized air into the air brake sub-system. As the solenoid valve 120 is arranged along the discharge line, the pressurized air from the compressor will not reach the air brake sub-system 108. Thereby, pressure drop in the air brake sub-system will be achieved faster compared to the scenario when the pressurized air is delivered to the air brake sub-system.

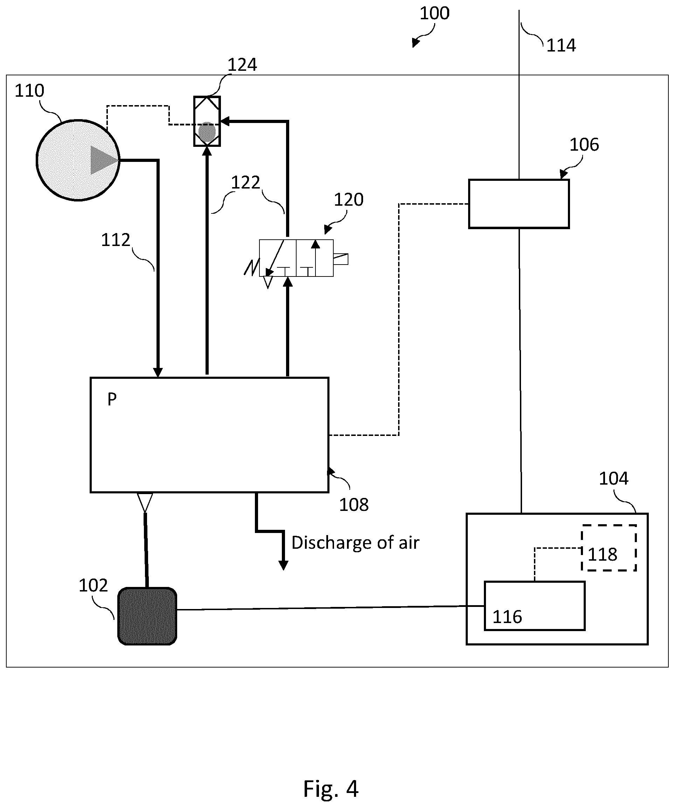

**FIG. 4** is yet another exemplary embodiment of a safety park brake system 100 of a vehicle according to an example. In this example, the safety park brake system further comprises a pneumatic control line 122 configured to guide pressurized air from the air brake sub-system 108. In this example, the solenoid valve 120 is arranged along the pneumatic control line 122 downstream the air brake sub-system 108. When there is no error in the system, the solenoid valve 120 operates in a first state. In this state, the solenoid valve is configured to block pressurized air from the air brake sub-system 108. In other words, there is no outlet on the pneumatic control line 122 on the solenoid valve side and no air leak from the air brake sub-system 108 as it is blocked by the solenoid valve 120. The control line 122 on the control valve side may operate to control the compressor. When there is a failure in the park brake electronic unit 104, the solenoid valve operates in a second state. In the second state, the solenoid valve 120 is configured to guide pressurized air from the air brake sub-system to the compressor 110. The compressor is configured to turn off upon receiving the pressurized air in order to impede inflow of pressurized air into the air brake sub-system. A control valve 124 may be arranged along the pneumatic control line 122 and after the solenoid valve 120. The solenoid valve guides pressurized air from the air brake sub-system to the control valve 124 and the control valve is configured to switch off power to the compressor upon receiving the pressurized air in order to impede inflow of pressurized air into the air brake sub-system.

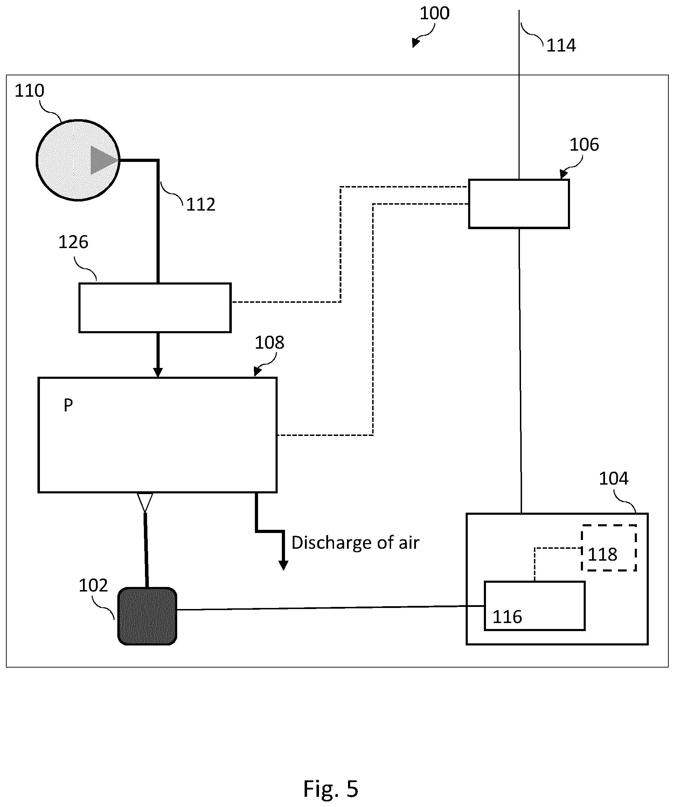

**FIG. 5** is yet another exemplary embodiment of a safety park brake system of a vehicle according to an example. In this example, in addition to the components shown in any of the FIG. 1-4, the safety park brake system 100 may further comprise an air dryer 126 arranged along the discharge line. FIG. 5 only illustrates the system 100 of FIG. 2 with the air dryer 126, however, any of embodiments shown in FIGS. 1, 3, or 4 may comprise the air dryer 126. The controller 106 controls the air dryer to discharge the pressurized air into the ambient air in order to impede inflow of pressurized air into the air brake sub-system. The air dryer may evacuate air from the compressor so that less or no air is delivered to the air brake sub-system. The air dryer may comprise an air dryer controller configured to receive input from the controller. In embodiments in which the air dryer is controlled by the central controller 106, typically the solenoid valve is also arranged as in Fig. 3. This is due to the scenario that may occur when the air dryer is controlled centrally and if the park brake electronic unit 104 fails, the air dryer may fail as well as there is no control on the exhaust valve of the air dryer.

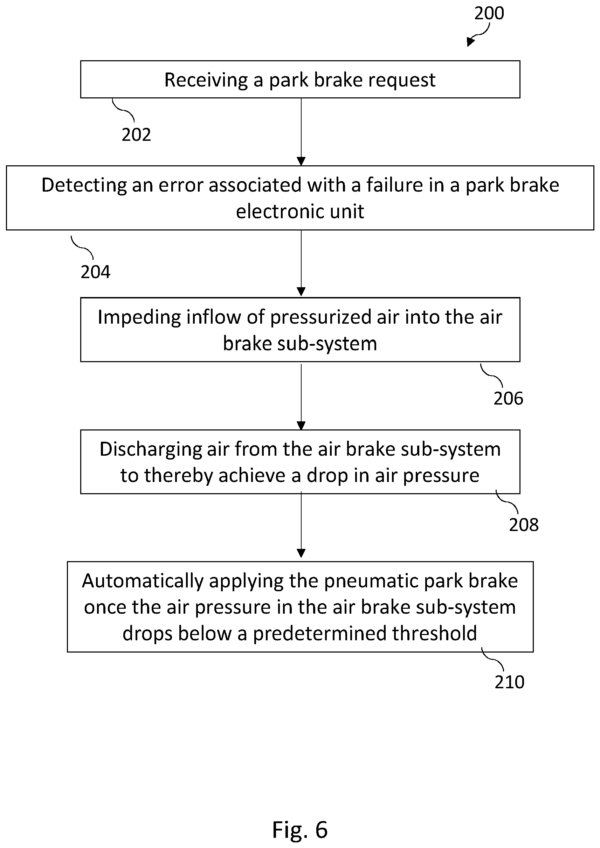

**FIG. 6** illustrates a method 200 for automatically activating a pneumatic park brake of a vehicle according to an example. The method comprises receiving a park brake request, step 202, detecting an error associated with a failure in a park brake electronic unit, step 204, impeding inflow of pressurized air into the air brake sub-system, step 206, discharging air from the air brake sub-system to thereby achieve a drop in air pressure, step 208, and automatically applying the pneumatic park brake once the air pressure in the air brake sub-system drops below a predetermined threshold, step 210.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention and appended claims. In the drawings and specification, there have been disclosed aspects for purposes of illustration only and not for purposes of limitation, the scope of the invention being set forth in the following claims.

## Claims

1. A safety park brake system (100) of a vehicle, the safety system comprising a pneumatic park brake (102), a park brake electronic unit (104), a controller (106), an air brake sub-system (108) in air communication with the pneumatic park brake, and a compressor (110) configured to provide pressurized air to the air brake sub-system through a discharge line (112) arranged between the compressor and the air brake sub-system, the controller being configured to:
- receive a park brake request (114),
- detect an error associated with a failure in the park brake electronic unit, and
- impede inflow of pressurized air into the air brake sub-system,
the safety park-brake system being configured to control discharge of air from the air brake sub-system to thereby achieve a drop in air pressure, and
wherein the pneumatic park brake is configured to automatically apply once the air pressure in the air brake sub-system drops below a predetermined threshold.

2. The safety park brake system of claim 1, wherein the park brake electronic unit comprises an electronic diagnostic unit (116) configured to monitor operation of the pneumatic park brake, the controller being configured to detect an error associated with a failure in the electronic diagnostic unit.

3. The safety park brake system of claim 1 or 2, wherein the park brake electronic unit comprises an electronic park brake (118), the controller being configured to detect an error associated with a failure in the electronic park brake.

4. The safety park brake system of any of the previous claims, wherein the controller is configured to receive the park brake request while the vehicle is at standstill.

5. The safety park brake system of any of the previous claims, further comprising a solenoid valve (120) configured to operate in at least a first state and a second state, wherein the controller is configured to control the state of the solenoid valve.

6. The safety park-brake system of claim 5, wherein the solenoid valve is arranged along the discharge line, wherein
- in a first state, the solenoid valve is configured to allow pressurized air from the air compressor to reach the air brake sub-system, and
- in a second state, the solenoid valve is configured to guide pressurized air from the air compressor into the ambient air in order to impede inflow of pressurized air into the air brake sub-system.

7. The safety park brake system of claim 5, further comprising a pneumatic control line (122) configured to guide pressurized air from the air brake sub-system, and wherein the solenoid valve is arranged along the pneumatic control line downstream the air brake sub-system, wherein
- in a first state, the solenoid valve is configured to block pressurized air from the air brake sub-system, and
- in a second state, the solenoid valve is configured to guide pressurized air from the air brake sub-system to the compressor, and wherein the compressor is configured to turn off upon receiving the pressurized air in order to impede inflow of pressurized air into the air brake sub-system.

8. The safety park brake system of claim 7, further comprising a control valve (124) arranged along the pneumatic control line, wherein the solenoid valve is configured to guide pressurized air from the air brake sub-system to the control valve and wherein the control valve is configured to switch off power to the compressor upon receiving the pressurized air in order to impede inflow of pressurized air into the air brake sub-system.

9. The safety park brake system of any of the preceding claims, further comprising an air dryer (126) arranged along the discharge line, the controller being configured to control the air dryer to discharge the pressurized air into the ambient air in order to impede inflow of pressurized air into the air brake sub-system.

10. The safety park brake system of claim 9, wherein the air dryer comprises an air dryer controller configured to receive input from the controller and wherein the air dryer controller is configured to control the air dryer to discharge the pressurized air into the ambient air in order to impede inflow of pressurized air into the air brake sub-system.

11. The safety park-brake system of any of the preceding claims, the safety park - brake system being configured to receive an external input to thereby discharge air from the air brake sub-system.

12. A method (200) for activating a pneumatic park brake of a vehicle, the vehicle comprising a compressor configured to provide pressurized air into an air brake sub-system being in air communication with the pneumatic park brake,
the method comprising:
- receiving (202) a park brake request,
- detecting (204) an error associated with a failure in a park brake electronic unit,
- impeding (206) inflow of pressurized air into the air brake sub-system,
- discharging (208) air from the air brake sub-system to thereby achieve a drop in air pressure, and
- automatically applying (210) the pneumatic park brake once the air pressure in the air brake sub-system drops below a predetermined threshold.

13. A vehicle comprising the safety park brake system according to any of claims 1-11.

## Patentansprüche

1. Sicherheitsfeststellbremssystem (100) eines Fahrzeugs, wobei das Sicherheitssystem eine pneumatische Feststellbremse (102), eine elektronische Feststellbremseinheit (104), eine Steuerung (106), ein Druckluftbremsteilsystem (108) in Luftverbindung mit der pneumatischen Feststellbremse und einen Verdichter (110), der dazu konfiguriert ist, dem Druckluftbremsteilsystem Druckluft durch eine Abführleitung (112), die zwischen dem Verdichter und dem Druckluftbremsteilsystem angeordnet ist, bereitzustellen, wobei die Steuerung zu Folgendem konfiguriert ist:
- Empfangen einer Feststellbremsanforderung (114),
- Detektieren eines Fehlers, der einem Ausfall der elektronischen Feststellbremseinheit zugeordnet ist, und
- Beeinträchtigen des Zuflusses von Druckluft in das Druckluftbremsteilsystem,
wobei das Sicherheitsfeststellbremssystem dazu konfiguriert ist, das Abführen von Luft aus dem Druckluftbremsteilsystem zu steuern, wodurch ein Abfall des Luftdrucks erzielt wird, und
wobei die pneumatische Feststellbremse dazu konfiguriert ist, automatisch betätigt zu werden, sobald der Luftdruck in dem Druckluftbremsteilsystem unter einen vorbestimmten Schwellenwert abfällt.

2. Sicherheitsfeststellbremssystem nach Anspruch 1, wobei die elektronische Feststellbremseinheit eine elektronische Diagnoseeinheit (116) umfasst, die dazu konfiguriert ist, den Betrieb der pneumatischen Feststellbremse zu überwachen, wobei die Steuerung dazu konfiguriert ist, einen Fehler zu detektieren, der einem Ausfall der elektronischen Diagnoseeinheit zugeordnet ist.

3. Sicherheitsfeststellbremssystem nach Anspruch 1 oder 2, wobei die elektronische Feststellbremseinheit eine elektronische Feststellbremse (118) umfasst, wobei die Steuerung dazu konfiguriert ist, einen Fehler zu detektieren, der einem Ausfall der elektronischen Feststellbremse zugeordnet ist.

4. Sicherheitsfeststellbremssystem nach einem der vorhergehenden Ansprüche, wobei die Steuerung dazu konfiguriert ist, die Feststellbremsanforderung zu empfangen, während das Fahrzeug steht.

5. Sicherheitsfeststellbremssystem nach einem der vorhergehenden Ansprüche, ferner umfassend ein Magnetventil (120), das dazu konfiguriert ist, in mindestens einem ersten Zustand und einem Zustand zu arbeiten, wobei die Steuerung dazu konfiguriert ist, den Zustand des Magnetventils zu steuern.

6. Sicherheitsfeststellbremssystem nach Anspruch 5, wobei das Magnetventil entlang der Abführleitung angeordnet ist, wobei
- das Magnetventil in einem ersten Zustand dazu konfiguriert ist, zu ermöglichen, dass Druckluft aus dem Luftverdichter das Druckluftbremsteilsystem erreicht, und
- das Magnetventil in einem zweiten Zustand dazu konfiguriert ist, Druckluft aus dem Luftverdichter in die Umgebungsluft zu leiten, um den Zufluss von Druckluft in das Druckluftbremsteilsystem zu beeinträchtigen.

7. Sicherheitsfeststellbremssystem nach Anspruch 5, ferner umfassend eine pneumatische Steuerleitung (122), die dazu konfiguriert ist, Druckluft aus dem Druckluftbremsteilsystem zu leiten, und wobei das Magnetventil entlang der pneumatischen Steuerleitung stromabwärts des Druckluftbremsteilsystems angeordnet ist, wobei
- das Magnetventil in einem ersten Zustand dazu konfiguriert ist, Druckluft aus dem Druckluftbremsteilsystem zu blockieren, und
- das Magnetventil in einem zweiten Zustand dazu konfiguriert ist, Druckluft aus dem Druckluftbremsteilsystem zu dem Verdichter zu leiten, und wobei der Verdichter dazu konfiguriert ist, das Empfangen der Druckluft abzustellen, um den Zufluss von Druckluft in das Druckluftbremsteilsystem zu beeinträchtigen.

8. Sicherheitsfeststellbremssystem nach Anspruch 7, ferner umfassend ein Steuerventil (124), das entlang der pneumatischen Steuerleitung angeordnet ist, wobei das Magnetventil dazu konfiguriert ist, Druckluft aus dem Druckluftbremsteilsystem zu dem Steuerventil zu leiten, und wobei das Steuerventil dazu konfiguriert ist, Leistung zu dem Verdichter abzuschalten, wenn die Druckluft empfangen wird, um den Zufluss von Druckluft in das Druckluftbremsteilsystem zu beeinträchtigen.

9. Sicherheitsfeststellbremssystem nach einem der vorhergehenden Ansprüche, ferner umfassend einen Lufttrockner (126), der entlang der Abführleitung angeordnet ist, wobei die Steuerung dazu konfiguriert ist, den Lufttrockner so zu steuern, dass er die Druckluft in die Umgebungsluft abführt, um den Zufluss von Druckluft in das Druckluftbremsteilsystem zu beeinträchtigen.

10. Sicherheitsfeststellbremssystem nach Anspruch 9, wobei der Lufttrockner eine Lufttrocknersteuerung umfasst, die dazu konfiguriert ist, eine Eingabe von der Steuerung zu empfangen, und wobei die Lufttrocknersteuerung dazu konfiguriert ist, den Lufttrockner so zu steuern, dass er die Druckluft in die Umgebungsluft abführt, um den Zufluss von Druckluft in das Druckluftbremsteilsystem zu beeinträchtigen.

11. Sicherheitsfeststellbremssystem nach einem der vorhergehenden Ansprüche, wobei das Sicherheitsfeststellbremssystem dazu konfiguriert ist, eine externe Eingabe zu empfangen, um dadurch Luft aus dem Druckluftbremsteilsystem abzuführen.

12. Verfahren (200) zum Aktivieren einer pneumatischen Feststellbremse eines Fahrzeugs, wobei das Fahrzeug einen Verdichter umfasst, der dazu konfiguriert ist, Druckluft einem Druckluftbremsteilsystem bereitzustellen, das mit der pneumatischen Feststellbremse in Luftverbindung steht, wobei das Verfahren Folgendes umfasst:
- Empfangen (202) einer Feststellbremsanforderung,
- Detektieren (204) eines Fehlers, der einem Ausfall einer elektronischen Feststellbremseinheit zugeordnet ist,
- Beeinträchtigen (206) des Zuflusses von Druckluft in das Druckluftbremsteilsystem,
- Abführen (208) von Luft aus dem Druckluftbremsteilsystem, um dadurch einen Abfall des Luftdrucks zu erzielen, und
- automatisches Betätigen (210) der pneumatischen Feststellbremse, sobald der Luftdruck in dem Druckluftbremsteilsystem unter einen vorbestimmten Schwellenwert abfällt.

13. Fahrzeug, umfassend das Sicherheitsfeststellbremssystem nach einem der Ansprüche 1-11.

## Revendications

1. Système de frein de stationnement de sécurité (100) d'un véhicule, le système de sécurité comprenant un frein de stationnement pneumatique (102), une unité électronique de frein de stationnement (104), un dispositif de commande (106), un sous-système de freinage à air (108) en communication pneumatique avec le frein de stationnement pneumatique, et un compresseur (110) configuré pour fournir de l'air sous pression au sous-système de freinage à air à travers une conduite de refoulement (112) agencée entre le compresseur et le sous-système de freinage à air, le dispositif de commande étant configuré pour :
- recevoir une demande de frein de stationnement (114),
- détecter une erreur associée à une défaillance de l'unité électronique de frein de stationnement, et
- empêcher l'entrée d'air sous pression dans le sous-système de freinage à air,
le système de frein de stationnement de sécurité étant configuré pour commander l'évacuation d'air du sous-système de freinage à air pour ainsi parvenir à une chute de pression d'air, et
dans lequel le frein de stationnement pneumatique est configuré pour s'appliquer automatiquement une fois que la pression d'air dans le sous-système de freinage à air descend en dessous d'un seuil prédéterminé.

2. Système de frein de stationnement de sécurité selon la revendication 1, dans lequel l'unité électronique de frein de stationnement comprend une unité de diagnostic électronique (116) configurée pour surveiller le fonctionnement du frein de stationnement pneumatique, le dispositif de commande étant configuré pour détecter une erreur associée à une défaillance de l'unité de diagnostic électronique.

3. Système de frein de stationnement de sécurité selon la revendication 1 ou 2, dans lequel l'unité électronique de frein de stationnement comprend un frein de stationnement électronique (118), le dispositif de commande étant configuré pour détecter une erreur associée à une défaillance du frein de stationnement électronique.

4. Système de frein de stationnement de sécurité selon l'une quelconque des revendications précédentes, dans lequel le dispositif de commande est configuré pour recevoir la demande de frein de stationnement lorsque le véhicule est à l'arrêt.

5. Système de frein de stationnement de sécurité selon l'une quelconque des revendications précédentes, comprenant en outre une électrovanne (120) configurée pour fonctionner dans au moins un premier état et un second état, dans lequel le dispositif de commande est configuré pour commander l'état de l'électrovanne.

6. Système de frein de stationnement de sécurité selon la revendication 5, dans lequel l'électrovanne est agencée le long de la conduite de refoulement, dans lequel
- dans un premier état, l'électrovanne est configurée pour permettre à l'air sous pression provenant du compresseur d'air d'atteindre le sous-système de freinage à air, et
- dans un second état, l'électrovanne est configurée pour guider l'air sous pression du compresseur d'air vers l'air ambiant afin d'empêcher l'entrée d'air sous pression dans le sous-système de freinage à air.

7. Système de frein de stationnement de sécurité selon la revendication 5, comprenant en outre une conduite de commande pneumatique (122) configurée pour guider l'air sous pression provenant du sous-système de freinage à air, et dans lequel l'électrovanne est agencée le long de la conduite de commande pneumatique en aval du sous-système de freinage à air, dans lequel
- dans un premier état, l'électrovanne est configurée pour bloquer l'air sous pression provenant du sous-système de freinage à air, et
- dans un second état, l'électrovanne est configurée pour guider l'air sous pression provenant du sous-système de freinage à air vers le compresseur, et dans lequel le compresseur est configuré pour s'arrêter lors de la réception de l'air sous pression afin d'empêcher l'entrée d'air sous pression dans le sous-système de freinage à air.

8. Système de frein de stationnement de sécurité selon la revendication 7, comprenant en outre une vanne de commande (124) agencée le long de la conduite de commande pneumatique, dans lequel l'électrovanne est configurée pour guider l'air sous pression provenant du sous-système de freinage à air vers la vanne de commande et dans lequel la vanne de commande est configurée pour couper l'alimentation du compresseur lors de la réception de l'air sous pression afin d'empêcher l'entrée d'air sous pression dans le sous-système de freinage à air.

9. Système de frein de stationnement de sécurité selon l'une quelconque des revendications précédentes, comprenant en outre un sécheur d'air (126) agencé le long de la conduite de refoulement, le dispositif de commande étant configuré pour commander le sécheur d'air pour évacuer l'air sous pression dans l'air ambiant afin d'empêcher l'entrée d'air sous pression dans le sous-système de freinage à air.

10. Système de frein de stationnement de sécurité selon la revendication 9, dans lequel le sécheur d'air comprend un dispositif de commande de sécheur d'air configuré pour recevoir une entrée du dispositif de commande et dans lequel le dispositif de commande de sécheur d'air est configuré pour commander le sécheur d'air pour évacuer l'air sous pression dans l'air ambiant afin d'empêcher l'entrée d'air sous pression dans le sous-système de freinage à air.

11. Système de frein de stationnement de sécurité selon l'une quelconque des revendications précédentes, le système de frein de stationnement de sécurité étant configuré pour recevoir une entrée externe pour ainsi évacuer l'air du sous-système de freinage à air.

12. Procédé (200) d'activation d'un frein de stationnement pneumatique d'un véhicule, le véhicule comprenant un compresseur configuré pour fournir de l'air sous pression dans un sous-système de freinage à air qui est en communication pneumatique avec le frein de stationnement pneumatique, le procédé comprenant :
- la réception (202) d'une demande de frein de stationnement,
- la détection (204) d'une erreur associée à une défaillance d'une unité électronique de frein de stationnement,
- le fait d'empêcher (206) l'entrée d'air sous pression dans le sous-système de freinage à air,
- l'évacuation (208) d'air du sous-système de freinage à air pour ainsi parvenir à une chute de pression d'air, et
- l'application automatique (210) du frein de stationnement pneumatique une fois que la pression d'air dans le sous-système de freinage à air descend en dessous d'un seuil prédéterminé.

13. Véhicule comprenant le système de frein de stationnement de sécurité selon l'une quelconque des revendications 1 à 11.
